Europäisches Patentamt

European Patent Office

Office européen des brevets

(11) Publication number: **0 430 602 B1**

# EUROPEAN PATENT SPECIFICATION

(45) Date of publication of patent specification: **13.09.95**  (51) Int. Cl.⁶: **C10M 173/02**, C09K 7/02, C09K 5/00, //B01F17/00

(21) Application number: **90312776.9**

(22) Date of filing: **23.11.90**

(54) **Functional fluids.**

(30) Priority: **28.11.89 GB 8926885**

(43) Date of publication of application:
**05.06.91 Bulletin 91/23**

(45) Publication of the grant of the patent:
**13.09.95 Bulletin 95/37**

(84) Designated Contracting States:
**AT BE CH DE DK ES FR GR IT LI LU NL SE**

(56) References cited:
**EP-A- 0 171 999**      **WO-A-85/03083**
**DE-A- 960 921**      **DE-A- 2 437 877**
**DE-A- 2 457 887**      **GB-A- 2 160 244**
**US-A- 4 781 849**

(73) Proprietor: **Albright & Wilson Limited**
**210-222 Hagley Road West**
**Oldbury**
**Warley**
**West Midlands B69 4PR (GB)**

(72) Inventor: **Williams, Michael John**
**25 Birchlands**
**Bridgnorth,**
**Shropshire WV15 4DR (GB)**
Inventor: **Grover, Boyd William**
**65 Summerfield Crescent,**
**Edgbaston**
**Birmingham,**
**West Midlands (GB)**
Inventor: **Nicholson, William John**
**117 Nimmings Road**
**Halesowen,**
**West Midlands B62 9SH (GB)**
Inventor: **Messenger, Edward Tunstall**
**Ramsey House,**
**Camerton**
**Workington,**
**Cumbria CA14 1NB (GB)**
Inventor: **Blezard, Michael**
**29 Headlands Drive**
**Whitehaven,**
**Cumbria (GB)**

(74) Representative: **Savidge, Roger Gordon Madgwick et al**
**Albright & Wilson Limited**
**Patents Department**
**210-222 Hagley Road West**
**Oldbury**
**Warley, West Midlands B68 0NN (GB)**

EP 0 430 602 B1

**Description**

The present invention relates to Functional Fluids, including Lubricants, especially Drilling Fluids and Cutting Fluids, as well as more conventional Lubricants for bearings, gears, machinery, and the like, Hydraulic Fluids, and Heat Transfer Fluids.

"Drilling Fluid" is used herein to refer to fluids used in the drilling of bore holes in rock to lubricate and cool drill bits, to transport rock cuttings away from the rock face. The term is also used herein to include "Spacer Fluids", which are used to clean the sides of bore holes prior to cementing. Drilling Fluids are used in the construction of deep wells and bore holes, and especially oil and gas wells. For convenience the term Drilling Fluid as used herein also embraces "Construction Muds", which are used in civil engineering and the construction industry to stabilise holes and excavations by preventing the breakdown of shales on exposure to water.

"Shaping" means any process for altering the shape of a solid workpiece by means of a tool, in which friction is generated, including drilling, cutting, grinding, boring, reaming, bending, stamping, pressing, hammering and the like.

"Cutting Fluid" is used herein to refer to fluids used in the Shaping of workpieces, especially in the metal working industries, which lubricate and cool drill bits, and cutting, grinding, and other Shaping tools, including lathes, saws, drills, stamps, presses, broaches, reamers, grindstones and the like.

"Lubricant" means, generally, a fluid which reduces friction between moving surfaces and specifically includes Cutting Fluids, Drilling Fluids, and lubricating fluids for bearings, gears, machinery, hinges and sliding surfaces.

"Heat Transfer Fluid" means a fluid which is used to transfer heat from a warmer to a cooler surface, or to store heat.

"Hydraulic Fluid" means a fluid which transmits pressure and/or kinetic energy in a hydraulic machine or device, such as hydraulic powered machinery, hydraulic brakes and control systems, shock absorbers and fluidic logic circuits.

"Functional Fluid" as used herein means a Lubricant, Heat Transfer Fluid or Hydraulic Fluid.

"Electrolyte" is used herein to denote those ionic compounds which dissociate at least partially in aqueous solution to provide ions, and which at the concentrations present tend to lower the total solubility (including micellar concentration) of surfactants in such solutions by a "salting out" effect. References herein to the Electrolyte content or concentration refer to the total dissolved Electrolyte, but excludes any suspended solid.

"Micelle" refers to a particle, which is either spherical or rod shaped, formed by aggregation of the surfactant molecules and having a radius less than twice the mean length of the surfactant molecules. The molecules in a Micelle are typically arranged such that their hydrophillic ("head") groups lie on the surface of the Micelle and the lipophillic ("tail") groups are in the interior of the Micelle.

"Bilayer" includes a layer of surfactant approximately two molecules thick, which is formed from two adjacent parallel layers, each comprising surfactant molecules which are disposed such that the lipophillic portions of the molecules are located in the interior of the Bilayer and the hydrophilic portions are located on its outer surfaces. "Bilayer" is also used herein to include interdigited layers, which are less than two molecules thick. An interdigited layer may be regarded as a Bilayer in which the two layers have interpenetrated allowing at least some degree of overlap between the tail groups of the molecules of the two layers.

"Spherulite" means a spherical or spheroidal body having dimensions of from 0.1 to 50 microns. Spherulites may sometimes be distorted into prolate, oblate, pear or dumbell shapes. "Vesicle" means a Spherulite containing a liquid phase bounded by a Bilayer. "Multiple Vesicle" means a Vesicle which contains one or more smaller Vesicles. The Spherulites present in structured surfactant systems are typically concentric Multiple Vesicles.

"Lamellar Phase" means a hydrated solid, or liquid crystal phase in which a plurality of Bilayers are arranged in a substantially parallel array of indefinite extent, separated by layers of water or an aqueous solution, and having a sufficiently regular lattice spacing of from 25 to about 150 nm to be readily detectable by neutron scattering or X-ray diffraction when present as a substantial proportion of a composition. As used herein the expression excludes concentric Multiple Vesicles.

"G" phase refers to a liquid crystal Lamellar Phase, of the type also known in the literature as "neat" phase or "lamellar" phase. The "G" phase for any given surfactant or surfactant mixture normally exists in a narrow range of concentrations. Pure "G" phases can normally be identified by examination of a sample under a polarising microscope, between crossed polarisers. Characteristic textures are observed in accordance with the classic paper by Rosevear, JAOCS Vol. 31 P628 (1954) or in J. Colloid and Interfacial Science, Vol. 20 No. 4, P.500 (1969). "G" phases normally exhibit a repeat spacing of from 50 to 70 nm, in X-ray diffraction or neutron scattering patterns. "Expanded G phase" means a "G" phase with a repeat spacing of 110 to 150 nm.

"Spherical G Phase" means Multiple Vesicles formed from substantially concentric shells of surfactant Bilayer alternating with aqueous phase with a "G" phase or Expanded G phase spacing. Typically conventional G phases may contain a minor proportion of Spherical G Phase.

"Lye" means an aqueous liquid phase containing Electrolyte, which phase separates from, or is Interspersed with, a second liquid phase containing more Active Ingredient and less Electrolyte than the Lye phase.

"Lamellar Composition" means a composition in which a major part of the surfactant is present as a Lamellar Phase, or in which a Lamellar Phase is the principal factor inhibiting sedimentation. "Spherulitic Composition" means a composition in which a major part of the surfactant is present as spherical G-phase, or which is principally stabilised against sedimentation by a Spherical G-phase.

"Structured Surfactant" means a fluid composition which has shear dependent viscocity and solid-suspending properties and which comprises a surfactant mesophase, which may optionally be dispersed in, or interspersed with an aqueous phase which is typically a Lye phase. The mesophase may, for example, comprise a G-phase, Spherulites, especially Spherical G-phase, or a Lamellar hydrated solid.

"Weighting Agent" means a water insoluble particulate mineral having a specific density greater than 3.5 and preferably greater than 4 e.g. barite or haematite.

"Drilling Mud" is a Drilling Fluid which contains suspended mineral particles, such as rock cuttings and or Weighting Agents.

It is a general problem with Functional Fluids that they most commonly comprise mineral oil, which is a potential polutant and fire hazard. Our invention concerns a solution to this problem which entails the use of aqueous Structured Surfactants, which are generally more environmentally acceptable than mineral oils, do not present a fire hazard, and yet may possess equal or superior physical properties and chemical stability.

The invention is of particular importance in the provision of Drilling Muds.

Drilling Fluids in oil wells are normally pumped continuously down the drill stem, through apertures in the drill bit and are then forced up to the surface through the annular space between the drill stem and the side of the hole, carrying the rock cuttings in suspension. At the surface the cuttings are separated from the Drilling Mud and the latter is then recycled. Prior to cementing the mud is replaced by a Spacer Fluid which transports loose particles from the hole and leaves a clean, water-wet surface to provide a good cement bond.

Certain rocks cause particular problems during drilling or excavation, due to their tendency to disintegrate in the Drilling Fluid to form fines which are very difficult to separate from the fluid and rapidly build up in the recycle stream causing increasing viscosity. Chief among the problem rocks is shale which generally disintegrates in the presence of water.

An acceptable Drilling Fluid needs to have a viscosity which is sufficiently low under conditions of shear to flow readily, but it also has to possess solid suspending properties. To achieve these conflicting requirements a thixotropic fluid is usually required. Moreover it must not cause excessive breakdown of rocks such as shale. If it is to be useful for deep drilling, the fluid must be thermally stable, and it is important that excessive loss of fluid into the formation should be avoided.

Hitherto these requirements have almost always been achieved by using either oil or an oil-in-water emulsion as the Drilling Fluid. The oil coats particles of shale and protects them from contact with water, thereby inhibiting their disintegration. However this in turn creates an environmental problem, especially in offshore drilling operations, when the rock cuttings are discarded. To avoid serious pollution the oil must be cleaned from the cuttings, before they can be dumped. It is difficult and expensive to reduce the oil contamination to currently permitted levels, but even these small amounts of residual oil are ecologically undesirable, and there is pressure to replace oil based drilling fluids altogether.

The alternative of using aqueous solutions containing polymeric suspending agents or dispersants and/or bentonite to suspend the rock cuttings is less environmentally harmful, and may be somewhat cheaper than the use of oil based muds, but only for shallow drilling, and where the formation presents no special problems. For deep drilling or for drilling, or digging, through problem formations such as shale, which is very frequently encountered in oil well drilling and excavation, such cheap aqueous fluids are inadequate. They have insufficient thermal stability to withstand the high temperatures of deep formations and they cause breakdown of the shale. Their lubricity is also generally inferior to that of oil based muds.

Attempts have been made to improve the performance of aqueous Drilling Fluids with a variety of special additives such as polymeric coating agents, and high concentrations of Electrolyte to help stabilise shale. These have substantially increased the cost of the mud, but have not succeeded in providing an aqueous fluid with adequate performance to replace oil based muds for deep drilling. However environmental pressure is increasingly compelling oil companies to adopt relatively expensive and technically inferior water based fluids in place of the conventional oil based muds.

Cutting Fluids are normally applied to metal surfaces to cool and lubricate drill bits and cutting tools, such as saws, lathes, stamps, presses, grindstones, reamers and broaches, and to remove swarf from the work. The Cutting Fluid is normally an emulsion of oil in water, and contains various additives to improve lubricity and prevent wear damage to the surface of the work. One common problem with Cutting Fluids is the prevalence of dermatitis among workers who regularly handle them, due to the additives and/or the oil. The presence of the oil may also be environmentally undesirable. There are similar environmental problems associated with other Functional Fluids, including conventional mineral oil Lubricants and Hydraulic Fluids. These also give rise to a fire hazard.

The art of formulating laundry detergents and similar cleaning preparations is remote from the art of formulating Lubricants and Hydraulic Fluids. The problems to be overcome in the two arts are not generally similar. However, we have noted that liquid cleaning preparation often require the presence of suspended solids. For example hard surface scouring creams require the presence of abrasives and effective laundry detergents require cost effective builders, which may be sparingly soluble or insoluble in water. These problems have been solved by utilising the interaction between Electrolytes and surfactants to provide solid suspending structures based on thixotropic dispersions or interspersions of surfactant mesophases with aqueous Electrolyte solutions.

GB 2,123,846 describes the use of Lamellar surfactant interspersed with an Electrolyte solution in liquid laundry detergent. A different structure, also referred to in GB 2 123 846, and present, although not specifically identified, in formulations exemplified in a number of other publications, comprises an array of Spherulites, each having a plurality of concentric shells of surfactant alternating with layers of Electrolyte solution. Patent specifications which describe formulations which probably exhibit Spherulitic or Lamellar structure include:

| AU 482374 | GB 855679 | US 2920045 |
|---|---|---|
| AU 507431 | GB 855893 | US 3039971 |
| AU 522983 | GB 882569 | US 3075922 |
| AU 537506 | GB 943217 | US 3232878 |
| AU 542079 | GB 955081 | US 3235505 |
| AU 547579 | GB 1262280 | US 3281367 |
| AU 548438 | GB 1405165 | US 3328309 |
| AU 550003 | GB 1427011 | US 3346503 |
| AU 555411 | GB 1468181 | US 3346504 |
| | GB 1506427 | US 3351557 |
| CA 917031 | GB 1577120 | US 3509059 |
| | GB 1589971 | US 3374922 |
| CS 216492 | GB 2600981 | US 3629125 |
| | GB 2028365 | US 3638288 |
| DE A1567656 | GB 2031455 | US 3813349 |
| | GB 2054634 | US 3956L58 |
| DE 2447945 | GB 2079305 | US 4019720 |
| | | US 4057506 |
| EP 0028038 | JP-A-52-146407 | US 4107067 |
| EP 0038101 | JP-A-56-86999 | US 4169817 |
| EP 0059280 | | US 4265777 |
| EP 0079646 | SU 498331 | US 4279786 |
| EP 0084154 | SU 922066 | US 4299740 |
| EP 0103926 | SU 929545 | US 4302347 |
| FR 2283951 | | |

although in most instances the structures which would have been present in the formulations as described were insufficiently stable to maintain solids in suspension. GB 2153 380 describes the Spherulitic structure and methods for preparing a close packed, space filling, structure, sufficiently robust to withstand various forms of shear and temperature stress, but sufficiently mobile to be readily poured. The method requires optimising Electrolyte concentrations within close limits.

In our pending British Patent Application No. 2229634 we have described the use of Structured Surfactants for the support of pesticides.

Prior art Functional Fluids including oil based Drilling Muds and Lubricants have contained minor proportions of surfactants as emulsifying agents for the oil or as dispersants for sludge. The surfactants have typically been present essentially as monolayers surrounding colloidal size droplets or particles of oil or dispersed solid. The protection of shale in Drilling Muds has been essentially due to the shale being coated with oil. The suspending properties and thixotropic character of oil based Drilling Mud has been provided by the interaction of the dispersed oil droplets. In the case of oil-free muds, the protection of the shale has been provided by the presence of polymers which encapsulate the rock particles irreversibly and are therefore consumed quantitatively when the rock is separated. The solid suspending properties are provided by polymeric thickeners such as sodium carboxymethyl cellulose or methacrylates. These tend to stabilise the suspension at the expense of the mobility of the fluid.

Electrolytes have been used in both oil based and water based Drilling Mud to control the water activity. If the concentration of the Electrolyte is sufficiently high to reduce the water activity of the mud to the same level as that of the shale, hydration of the latter will not occur. However, if the water activity of the mud is too low the shale will tend to dehydrate and become brittle and if it is too high it will tend to hydrate and disintegrate, unless there is some protective barrier between the shale and the aqueous medium. Unfortunately it is not possible consistently to maintain the Electrolyte at the optimum level because the mineral strata contain soluble salts which tend to dissolve in the mud altering the Electrolyte content as it passes through the hole.

We have now discovered that aqueous Structured Surfactants have surprisingly good lubricity for both rock and metal, even under extreme pressure conditions and in the absence of extreme pressure additives. In addition, such Structured Surfactants exhibit the rheological characteristics required for a Drilling Fluid or Hydraulic Fluid and also the ability to suspend solid rock cuttings, or swarf and, surprisingly, they protect shale against disintegration, even in the total absence of any oil or protective polymer. We believe that the shale is protected by a coating of surfactant. The fluid is easily separated from rock cuttings and any residual surfactant can easily be washed from the cuttings with water. The clean cuttings present no ecological hazard and may be safely dumped. The aqueous surfactant is a Structured Surfactant such as those formed by the interaction of surfactant with dissolved Electrolyte, preferably a Spherulitic system. Typically it comprises a surfactant/water mesophase interspersed with an aqueous or aqueous Electrolyte continuous phase.

An important and particularly surprising characteristic of the Spherulitic compositions when used as Drilling Fluids is the low fluid loss into the formation, which is significantly lower than with conventional Drilling Fluids, even without additives which are normally required. The Structured Surfactants can readily be formulated in a heat stable form for high temperature applications such as deep drilling.

In our invention both suspending properties and protection of shale are provided essentially by the surfactant, preferably in conjunction with some dissolved Electrolyte. While we do not wish to be limited thereby, we believe that the surfactant may coat shale particles reversibly. It may also help to maintain an optimum water activity. The surfactant is preferably present in our composition as spherical G-phase, dispersed Lamellar phase or Micelles.

Generally our invention provides the use of aqueous, Structured Surfactants as, or in, Functional Fluids.

According to one embodiment our invention provides the use of Structured Surfactants as, or in, Hydraulic Fluids.

According to a second embodiment our invention provides the use of Structured Surfactants as, or in, Heat Transfer Fluids.

According to a third embodiment our invention provides the use of Structured Surfactants to reduce friction between moving surfaces.

According to the latter embodiment our invention includes a method of lubricating bearing surfaces, gears and the like which comprises applying thereto an aqueous Structured Surfactant.

In particular our invention provides a method of drilling bore holes or of Shaping metal or other workpieces which comprises using as Drilling Fluid or Cutting Fluid an aqueous Structured Surfactant which is preferably a solution containing surfactant Micelles, or interspersed with a Lamellar solid, Spherulitic or G-phase surfactant, in a quantity sufficient to inhibit disintegration of shale or provide wear protection to metal surfaces and to maintain the rock cuttings or swarf in suspension under normal drilling conditions.

According to a further embodiment our invention comprises the use of aqueous Structured Surfactants as, or in, Construction Muds or Spacer Fluids.

According to a further embodiment our invention provides a Functional Fluid comprising an aqueous Structured Surfactant and a corrosion inhibitor dissolved therein.

According to a further embodiment our invention provides a Drilling Mud comprising an aqueous Structured Surfactant which preferably comprises: (A) a continuous aqueous phase, (B) a Lamellar solid, Spherulitic or G-phase surfactant structure interspersed with said aqueous phase; in an amount sufficient to confer solid suspending properties thereon and, (C) suspended solid particles of shale and/or Weighting Agent.

According to a further embodiment, our invention further provides a Cutting Fluid or other Lubricant comprising an aqueous Structured Surfactant and containing wear inhibiting or lubricity promoting additives.

According to a further embodiment our invention provides a Heat Transfer Fluid comprising a particulate solid, having a high specific heat capacity such as ferrophosphorus.

The compositions of our invention preferably contain at least 3%, more usually at least 4%, e.g. at least 5% by weight of surfactants. The surfactants may constitute up to about 35% by weight of the composition, although we prefer on both economic and rheological grounds to use lower concentrations e.g. less than 30%, more usually less than 25%, preferably less than 20%, e.g. 10 to 15% by weight.

The surfactant may for example consist substantially of an at least sparingly water-soluble salt of sulphonic or mono esterified sulphuric acids e.g. an alkylbenzene sulphonate, alkyl sulphate, alkyl ether sulphate, olefin sulphonate, alkane sulphonate, alkylphenol sulphate, alkylphenol ether sulphate, alkylethanolamide sulphate, alkylethanolamide ether sulphate, or alpha sulpho fatty acid or its esters each having at least one alkyl or alkenyl group with from 8 to 22, more usually 10 to 20, aliphatic carbon atoms. Said alkyl or alkenyl groups are preferably straight chain primary groups but may optionally be secondary, or branched chain groups. The expression "ether" hereinbefore refers to oxyalkylene and homo- and mixed polyoxyalkylene groups such as polyoxyethylene, polyoxypropylene, glyceryl and mixed polyoxyethylene-oxypropylene or mixed glyceryl-oxyethylene, glyceryl-oxypropylene groups, or glyceryl-oxyethylene-oxypropylene groups, typically containing from 1 to 20 oxyalkylene groups. For example, the sulphonated or sulphated surfactant may be sodium dodecyl benzene sulphonate, potassium hexadecyl benzene sulphonate, sodium dodecyl dimethyl benzene sulphonate, sodium lauryl sulphate, sodium tallow sulphate, potassium oleyl sulphate, ammonium lauryl monoethoxy sulphate, or monethanolamine cetyl 10 mole ethoxylate sulphate.

Other anionic surfactants useful according to the present invention include fatty alkyl sulphosuccinates, fatty alkyl ether sulphosuccinates, fatty alkyl sulphosuccinamates, fatty alkyl ether sulphosuccinamates, acyl sarcosinates, acyl taurides, isethionates, soaps such as stearates, palmitates, resinates, oleates, linoleates, rosins soaps and alkyl ether carboxylates and saponins. Anionic phosphate esters including naturally occurring surfactants such as lecithin may also be used. In each case the anionic surfactant typically contains at least one aliphatic hydrocarbon chain having from 8 to 22 preferably 10 to 20 usually an average of 12 to 18 carbon atoms, an ionisable acidic group such as a sulpho-, acid sulphate, carboxy, phosphono-or acid phosphate group, and, in the case of ethers, one or more glyceryl and/or from 1 to 20 ethyleneoxy and/or propyleneoxy groups.

Preferred anionic surfactants are sodium salts. Other salts of commercial interest include those of potassium, lithium, calcium, magnesium, ammonium, monoethanolamine, diethanolamine, triethanolamine and alkyl amines containing up to seven aliphatic carbon atoms, such as isopropylamine.

The surfactant preferably contains or consists of nonionic surfactants. The nonionic surfactant may be e.g. a $C_{10-22}$ alkanolamide of a mono or di- lower alkanolamine, such as coconut or tallow monoethanolamide or diethanolamide. Other nonionic surfactants which may optionally be present, include ethoxylated alcohols, ethoxylated carboxylic acids, ethoxylated amines, ethoxylated alkylolamides, ethoxylated alkylphenols, ethoxylated glyceryl esters, ethoxylated sorbitan esters, ethoxylated phosphate esters, and the propoxylated, butoxylated and mixed ethoxy/propoxy and/or butoxy analogues of all the aforesaid ethoxylated nonionics, all having a $C_{8-22}$ alkyl or alkenyl group and up to 20 ethyleneoxy and/or propyleneoxy and/or butyleneoxy groups, or any other nonionic surfactant which has hitherto been incorporated in powder or liquid detergent compositions e.g. amine oxides. The latter typically have at least one $C_{8-22}$, preferably $C_{10-20}$ alkyl or alkenyl group and up to two lower (e.g. $C_{1-4}$, preferably $C_{1-2}$) alkyl groups.

The preferred nonionics for our invention are for example those having an HLB range of 2-18 e.g. 8-18.

Our compositions may contain cationic surfactants, which include quaternary amines having at least one long chain (e.g. $C_{12-22}$ typically $C_{16-20}$) alkyl or alkenyl group optionally one benzyl group and the remainder of the four substituents short chain (e.g. $C_{1-4}$) alkyl groups. They also include imidazolines and quaternised imidazolines having at least one long chain alkyl or alkenyl group, and amido amines and quaternised amido amines having at least one long chain alkyl or alkenyl group. The quaternised surfactants are all usually salts of anions which impart a measure of water solubility such as formate, acetate, lactate, tartrate, chloride, methosulphate, ethosulphate, sulphate or nitrate. Especially effective as Lubricants are cationic surfactants having two long chain fatty alkyl e.g. tallow groups, such as bis tallowyl quaternary ammonium and imidazolinium salts.

Compositions of our invention may also contain one or more amphoteric surfactant, which include betaines, sulphobetaines and phosphobetaines formed by reacting a suitable tertiary nitrogen compound having a long chain alkyl or alkenyl group with the appropriate reagent, such as chloroacetic acid or propane sultone. Examples of suitable tertiary nitrogen containing compounds include: tertiary amines having one or two long chain alkyl or alkenyl groups and optionally a benzyl group, any other substituent being a short chain alkyl group; imidazolines having one or two long chain alkyl or alkenyl groups and amidoamines having one or two long chain alkyl or alkenyl groups. Generally amphoteric surfactants are less preferred than non-ionic, or anionic, surfactants.

The specific surfactant types described above are only exemplary of the commoner surfactants suitable for use according to the invention. Any surfactant may be included. A fuller description of the principal types of surfactant which are commercially available is given in "Surface Active Agents and Detergents" by Schwartz Perry and Berch.

Generally we prefer that surfactants for use according to our invention should be substantially non-toxic, especially to marine life, we also prefer that the surfactants should be substantially stable at temperatures above 100°C, preferably above 120°C, especially above 150°C and, e.g. for deep drilling applications, above 180°C.

Dissolved Electrolyte compounds are strongly preferred constituents of our compositions. Although it is possible to prepare Structured Surfactants in the absence of Electrolyte, if the surfactant concentration is sufficiently high, the mobility of such systems is often insufficient unless the surfactant has been selected with great care. Addition of Electrolyte permits the preparation of mobile Structured Surfactants containing relatively low concentrations of surfactant.

Suitable Electrolytes include the water soluble alkali metal, ammonium and alkaline earth metal salts of the strong mineral acids. Particularly preferred are sodium and potassium salts especially the chlorides. However lithium, calcium and magnesium salts may also be present. Among salts that are useful may be included phosphates, nitrates, bromides, fluorides, condensed phosphates, phosphonates, acetates, formates and citrates. It is often particularly convenient, in the case of Drilling Fluids to make up the composition by diluting a surfactant concentrate on site with locally occurring natural brine (e.g. sea water in the case of offshore operations). This may be used to provide all or part of the Electrolyte content of the Drilling Fluid.

The Electrolyte may be present in concentrations up to saturation. Typically the less the amount of surfactant present, the more Electrolyte will be required to form a structure capable of supporting solid materials. We generally prefer to use higher concentrations of Electrolyte and lower concentrations of surfactant, and to select the cheapest Electrolytes on economic grounds. Thus Electrolyte should normally be present in a concentration of at least 0.1% by weight based on the total weight of the composition, more usually at least 0.5% e.g. more than 0.75% preferably more than 1%. Usually the concentration is less than 30% more usually less than 10% e.g. less than 8% by weight. Typically the concentration is between 1% and 5%.

The maximum Electrolyte concentration depends, among other things, on the type of structure, and the viscosity required as well as considerations of cost. We prefer to form Spherulitic compositions as described in our application GB-A-2,153,380 in order to obtain a satisfactory balance between mobility and high load of suspended solids. The optimum concentration of Electrolyte for any particular type and amount of surfactant may be ascertained as described in our aforesaid application by observing the variation of electrical conductivity with increasing Electrolyte concentration until the first conductivity minimum is observed. Samples may be prepared and tested by centrifuging for 90 minutes at 20,000G, adjusting the Electrolyte concentration to obtain a suspending medium which does not separate into two phases in the centrifuge.

Preferably the Electrolyte concentration is adjusted to provide a composition which is non-sedimenting on standing for three months at ambient temperature, or at 0°C or 40°C. We particularly prefer compositions which do not show signs of sedimentation or separation into two or more layers after being maintained for 72 hours at 100°C in an autoclave. Preferably also the Electrolyte content is adjusted to provide a shear stable composition and desirably, one which does not increase viscosity substantially on standing after exposure to normal shearing.

Alternatively sufficient Electrolyte may be added to form a Lamellar system as described in GB-2,123,846, e.g. by adding enough Electrolyte to ensure that the liquid suspending medium separates on centrifuging at 800G for seventeen hours to form a Lye phase containing little or no surfactant. The amount of water in the formulation may then be adjusted to obtain an optimum balance of mobility and stability.

7

In the case of Drilling Muds and Spacer Fluids, it is usually desirable to supply to the hole a fluid that contains the necessary concentrations of surfactant and Electrolyte to form a solid-suspending structure. However Electrolyte salts occurring in the rock through which the hole is being drilled may sometimes be capable of forming the structure in situ if only an aqueous surfactant is supplied. It is often preferred to supply an aqueous system containing less than the optimum amount of Electrolyte in order to allow for dissolution of Electrolyte minerals occurring in the hole.

The quantity of Electrolyte required, also depends on the nature and solubility of the surfactant. Generally surfactants with high cloud points need less Electrolyte than surfactants with low cloud point. With some surfactants no Electrolyte is required

The surfactants or surfactant mixtures that can be used in Electrolyte-free compositions according to the present invention are typically those that form a 'G' phase at ambient temperature, but, preferably, do not form an $M_1$ phase. Generally speaking the aqueous surfactant has a cloud point greater than 30°C, more usually greater than 40°C and preferably greater than 50°C. Aqueous surfactants having a cloud point above 60°C are especially suitable. Alternatively or additionally the surfactant may have an inverse cloud point below 30°C, more usually below 20°C, especially below 10°C, preferably below 0°C. Surfactants with an inverse cloud point below -10°C are especially useful. Inverse cloud points are typical of some nonionic surfactants, in which increasing temperature tends to break the hydrogen bonds responsible for hydration of the hydrophilic part of the molecule, thus rendering it less soluble. Normal cloud points are more typical of anionic or cationic surfactants. Mixtures of anionic and nonionic surfactant may show a cloud point and/or an inverse cloud point.

It is usually preferred that the surfactant should be present in a concentration of at least 1% eg at least 3% by weight of the composition more usually above 5%, especially above 8% and preferably 10% to 15%. A typical range of concentrations of the surfactants is from 6 to 15% more usually 7 to 12%. Other concentration of surfactants which may be used are 1-30% eg 2-15% by weight of the composition. We prefer that the concentration of surfactant should be sufficient, in the presence of any Electrolyte in the formulation to provide compositions with a plastic viscosity as measured on a Fann viscometer of from 5 to 35 cps- that is 0.005 to 0.035 Pa sec preferably from 0.015 to 0.03 e.g. 0.02 to 0.025 Pa sec. We prefer that the composition should have a Yield Point greater than 15lb/100ft$^2$ preferably from 30 to 50 especially from 35 to 45 e.g. 40lb/100ft$^2$. These Yield Points are approximately equal, respectively, to 7.25. Pa;14 to 25 Pa; 17 to 22 Pa; and 20 Pa. We particularly prefer that the composition should have a ratio of Yield Point to Plastic Viscocity of from 1 to 2.5 especially 1.5 to 2 e.g. 1.8 expressed in cps and lb/100ft$^2$ respectively. These ratios correspond approximately to: 50 to 120; 70 to 95; 85 expressed in SI units.

Concentrations of surfactant above 60% are possible but very unlikely to be commercially viable at least for the majority of foreseeable uses of the invention.

Particularly preferred in Electrolyte-free systems are nonionic and mixed nonionic surfactants, especially mixtures of fatty alcohol ethoxylates and mixtures of fatty alcohol ethoxylates with fatty acid ethoxylates or mixed ethoxylated/propoxylated alcohols and fatty acids ethoxylates. For example mixtures comprising one or more $C_{10}$ to $C_{20}$ average fatty alcohols and or fatty acids alkoxylated with from 5 to 15 ethyleneoxy and/or propyleneoxy groups, are especially useful. Other non-ionic surfactant which may be used include alkoxylated alkylphenols, alkoxyated amines, alkoxylated sorbitan or glycerol esters of fatty acids, and alkanolamides such as coconut mono- or di-ethanolamide and mixtures thereof.

Drilling Muds contain suspended solid which may comprise rock cuttings such as shale, and/or may comprise a Weighting Agent such as barite or haematite. The total amount of suspended solid may typically vary from about 5% by weight up to about 60% by weight or more, preferably from 10 to 50% e.g. 35 to 45%.

Preferably sufficient Weighting Agent is included to provide a specific gravity of from 1 to 1.8.

We prefer that the Functional Fluids of our invention should have low foaming properties. While this can be achieved by selecting inherently low foaming surfactants, we may be able to include antifoams such as silicone oil antifoams, phosphate esters, fatty alcohols or, less preferably, hydrocarbon oils. Typically the antifoam is required in concentrations of 0.1 to 5% by weight.

The composition may optionally include a suspending agent such as carboxymethyl cellulose or polyvinyl pyrrolidone, usually in amounts up to 5% e.g. 0.5 to 2% by weight. For reasons of cost and rheology, however, we prefer to avoid the use of such suspending agents.

We prefer that Drilling Muds of our invention are substantially free from oil or organic solvents, either water-miscible solvents such as lower mono or polyhydroxy alcohols, ketones and polyethers or water-immiscible solvents such aromatic hydrocarbons, and also from any hydrotropes such as urea, benzene sulphonate or lower alkyl benzene sulphonates. Solvents and hydrotropes tend to interfere with surfactant structuring and require the use of substantially increased amounts of surfactant and/or Electrolyte. They also increase the cost of the formulation without generally increasing performance. Oil and solvents are in addition highly undesirable on environmental grounds. We therefore prefer, if present at all, that oils, solvents and hydrotropes are each present in proportions less than 10%, more preferably less than 5%, most preferably less than 1%, e.g. less than 0.5%, usually less than 0.1% and most commonly less than 0.05% by weight, based on the weight of the composition.

Cutting Fluids and lubricants for bearings, gears and the like, according to our invention may optionally contain minor amounts of mineral or vegetables oils or solid lubricants such as graphite suspended or emulsified in the aqueous Structured Surfactant.

We prefer that polymeric thickening agents such as gums are absent or present in concentrations less than 5%, preferably less than 0.5% since they are not generally necessary to stabilise the compositions and since they increase the cost and viscosity of the suspensions.

Drilling Muds or other Functional Fluids of our invention may optionally contain auxiliary structuring agents such as bentonite but such additions are normally unnecessary to prevent fluid loss and may be detrimental to rheological proprieties. If present, bentonite should preferably not be in excess of 5% by weight of the total composition. However Drilling Fluids of our invention are generally capable of tolerating the presence of bentonite adventitiously derived from minerals in the bore hole.

Drilling Muds may optionally contain suspended graphite to increase lubricity.

The composition may optionally contain a biocide such as glutaraldehyde, or preferably a tetrakis hydroxymethyl phosphonium salt such as THP sulphate or a mixture thereof with glutaraldehyde, to inhibit the growth of sulphate reducing bacteria which may cause corrosion of the pipes, spoilage of the fluid and/or infection of the formation.

Lubricants may contain E.P. additives and all Functional Fluids other invention desirably contain corrosion inhibitors such as phosphite esters, phosphonates, polyphosphonates, chromates and zinc salts. The corrosion inhibitor is preferably an organic chelating agent or other inhibitor of corrosion of metal surfaces by aqueous solutions.

The invention is illustrated by the following examples in which all proportions are by weight based on the total weight of the composition unless stated to the contrary.

| EXAMPLE | 1 | 2 | 3 | 4 | 5 |
|---|---|---|---|---|---|
| AES | 3.2 | 3 | 2.65 | - | - |
| IPABS | 6.4 | 7 | 4.02 | - | - |
| LABS | - | - | - | 10.7 | 10.7 |
| AO | - | - | - | 2.1 | 2.1 |
| DEABS | - | - | - | 2.1 | 2.1 |
| KCl | 1 | - | 1 | 1.2 | 1.0 |
| KA | - | 0.4 | - | - | - |
| Yield Point N m$^{-2}$ | 35.43 | 24.42 | 18.19 | 6.22 | 4.79 |
| Plastic Viscosity(Pas) | 0.015 | 0.043 | 0.021 | 0.025 | 0.02 |
| YP/PV x 10$^{-3}$ | 23.62 | 5.68 | 6.66 | 2.49 | 2.4 |
| Shale recovery at R.T. | 94.8 | 96.2 | 97.8 | 95.8 | 91.2 |
| Shale recovery at 60°C | - | 92.0 | 93.2 | 91.8 | 87.0 |

**AES** is a sodium $C_{12 \text{ to } 16}$ alkyl three mole ethoxy sulphate.

**IPABS** is isopropylamine $C_{10-14}$ linear alkyl benzene sulphonate

**LABS** is sodium $C_{10-14}$ linear alkyl benzene sulphonate

**AO**       is $C_{12-16}$ alkyl dimethyl amine oxide

**DEABS**    is diethanolamine $C_{10-14}$ linear alkyl benzene sulphonate

**KCl**      is potassium chloride

**KA**      is potassium acetate

Examples 1, 2 and 3 were clear micellar solutions. Examples 4 and 5 were opaque spherulitic compositions.

All five examples were capable of suspending 50 gm barite in 350 ml. at 80°C for 18 hours.

Example 6

A drilling mud was prepared by suspending 1118.7gm barite in 1500.0 gm of 10% aqueous IPABS. The latter was an opaque spherulitic composition and the mud formed a stable suspension.

Example 7

A drilling mud was prepared by suspending 1028.8g barite and 3g silicone antifoam in 1500g of an aqueous spherulitic composition comprising 2.25% diethanolamine, 10.5% LABS and 2.25% amine oxide.

Example 8

A drilling mud was prepared by suspending 1094.6g barite 37.5g bentonite and 3g. silicone antifoam in 10% aqueous IPABS.

Example 9

A drilling mud suitable for making up offshore using sea water comprises 8% LABS, 8% coconut diethanolamide and 4% sodium chloride.

Example 10

The products of Example 6, 7 and 8 were compared with a commercial oil based mud for sedimentation using a slant tube test. A 1 meter 40mm bore tube containing the test mud at an angle of 45° to vertical was allowed to stand for 120 hours at the end of which period separation of a less opaque phase was visible in the top 35cm of the oil based mud but no such separation was visible in the samples of the invention.

Example 11

The commercial oil based mud was compared with the products of examples 6 and 7 in a low pressure static filtration. This indicates the tendency of the mud to lose fluid to the formation. Results are reported in the following Table 1.

Table 1

|  | oil based (comparative) | Example 6 | Example 7 |
|---|---|---|---|
| Thickness of filter cake | 1 mm | < 1 mm | < 1 mm |
| Filtrate discharge | 3.5 ml | 3.6 ml | 1.7 ml |

Example 12

The lubricity of the composition described in Example 9 was tested using the FALEX method as described in Institute of Petroleum test method IP 241 69.

A clean metal spindle was rotated between two V blocks under a progressively increasing load, while immersed in the test lubricant, without circulation.

The composition of the invention was compared with three comparative lubricants, namely water, mineral oil and a bentonite suspension. All three comparisons failed (at 500lbf, 1000lbf, and 1500lbf respectively) The composition of the invention in contrast gave excellent lubricity at all loads up to and including the maximum load of 4000lbf. It was the only lubricant of the four to survive the test without failure.

Example 13

Various Structured Surfactants were compared with water, mineral oils and non-structured surfactant solutions in the test of Example 12. The results are set out in Table 2 in which all % are by weight based on the total weight of the mixture. The lubricants are listed in increasing order of performance in the test. Only the last three lubricants survived the whole test without seizure.

## Table 2

| Lubricant | | | Coefficient of Friction[1] | Failure |
|---|---|---|---|---|
| * | i. | Water | 0.107 | 7 secs at 750lbf |
| * | ii. | Mineral oil containing E.P. additives ("Tellus" RIO) | 0.065 | 44 secs at 750lbf |
| * | iii. | Mineral oil containing no additives ("Turbo" T68) | 0.048 | 6 secs at 1250lbf |
| * | iv. | 30% LABS (not structured) | 0.050 | 45 secs at 1500lbf |
| | v. | Example 1 of GB 2123846 (Lamellar structure) | 0.048 | 54 secs at 1500lbf |
| | vi. | 14% LABS 6% OB (Spherulitic) | 0.042 | 13 secs at 200lbf |
| | vii. | 10% IPABS (Spherulitic) | 0.038 | 45 secs ate 2500lbf |
| | viii. | 3% IPABS, 12% AES, 4%NaCl (Spherulitic) | 0.053 | 41 secs at 2750lbf |
| | ix. | 12% LABS, 8% AE, 3%NaCl (Spherulitic) | 0.031 | 41 secs at 3500lbf |
| | x. | 50% IPABS (G-phase) | 0.024 | 57 secs at 4000lbf |
| | xi. | 8% LABS, 8% coconutdiethanolamide, 4%NaCl (Spherulitic) | 0.024 | 51 secs at 4250lbf |
| | xii. | 8% LABS, 8% coconutdiethanolamide, 4%NaCl 2% graphite (Spherulitic), | 0.027 | 51 secs at 4250lbf |

xiii. 20% LABS, 10%

coconutdiethanolamide

(Spherulitic)     0.028     No failure at
4500lbf

xiv. 3% LABS, 12% IPABS,

2% NaCl          (Spherulitic)  0.026   "      "      "

xv. 25% imidazoline[2] (Spherulitic)  0.020   "      "      "


* comparative example


1. coefficients of friction are as measured immediately prior to failure/conclusion of test.


2. 1-methyl, 1-tallowamidoethyl, 2-tallowyl imidazolinium methosulphate.


Example 14

A typical mineral oil based hydraulic fluid has a flash point of 103°C. None of the examples of the invention described herein exhibited a measurable flash point.

Example 15

Compositions according to examples 13 (xiii) and 13 (xiv) above may be used as cutting oils in a machine shop.
They are sucessfully used in place of conventional cutting oils, on drills, lathes and saws, giving smooth Shaping of the metal with reduced scoring or other damage to the work, and extended life of drill bits and blades.

**Claims**

1.  The use of aqueous Structured Surfactants comprising water and a surfactant structure which confers shear-dependent viscosity and solid-suspending properties as, or in, Functional Fluids selected from the group consisting of Lubricants, Hydraulic Fluids and Heat Transfer Fluids.

2.  The use according to claim 1 of aqueous Structured Surfactants as, or in, Hydraulic Fluids.

3.  The use according to claim 1 of aqueous Structured Surfactants as, or in, Heat Transfer Fluids.

4.  The use according to claim 1 of aqueous Structured Surfactants to reduce friction between moving surfaces.

5.  The use of aqueous Structured Surfactants as, or in, Drilling Fluids, Spacer Fluids or Construction Muds.

6.  A method of lubricating surfaces by applying thereto a fluid Lubricant characterized in that said Lubricant comprises an aqueous Structured Surfactant comprising water and a surfactant structure which confers shear-dependent viscosity and solid-suspending properties.

14

7. A method according to claim 6 of drilling bore holes or Shaping workpieces by means of a drill bit or Shaping tool wherein a Drilling Fluid or Cutting Fluid respectively is applied to said drill bit or Shaping tool <u>characterized in that</u> said Drilling Fluid or Cutting Fluid comprises an aqueous Structured Surfactant.

8. A method according to either of claims 6 and 7 wherein said Structured Surfactant comprises an aqueous solution interspersed with a surfactant present as a Lamellar solid, Spherulites or G-phase in a quantity sufficient to provide wear protection to metal surfaces and/or inhibit disintegration of shale and/or maintain rock cuttings or swarf in suspension, during drilling or Shaping.

9. A Functional Fluid selected from the group consisting of Lubricants, Hydraulic Fluids and Heat Transfer Fluids comprising an aqueous Structured Surfactant comprising water and a surfactant structure which confers shear-dependent viscosity and solid-suspending properties and having dissolved therein a corrosion inhibitor.

10. A Drilling Mud comprising an aqueous Structured Surfactant comprising water and a surfactant structure which confers shear-dependent viscosity and solid-suspending properties .

11. A Drilling Mud according to claim 10 having suspended therein solid particles of shale and/or a Weighting Agent.

12. A Drilling Mud, according to either of claims 10 and 11 containing suspended solid particles of barite and/or haematite.

13. A Heat Transfer Fluid comprising an aqueous Structured Surfactant comprising water and a surfactant structure which confers shear-dependent viscosity and solid-suspending properties having suspended therein particles of a solid heat storage medium.

14. A Lubricant comprising an aqueous Structured Surfactant comprising water and a surfactant structure which confers shear-dependent viscosity and solid-suspending properties containing wear inhibiting or lubricity promoting additives.

15. A Cutting Fluid according to claim 14.

16. A composition according to any of claims 9 to 15 wherein said Structured Surfactant comprises:
    (A) an aqueous phase;
    (B) a Lamellar solid, Spherulitic or G-phase dispersed in, or interspersed with, said aqueous phase.

17. A composition according to claim 16 wherein said aqueous phase comprises a solution of Electrolyte.

18. A Drilling Mud according to claim 17 wherein said Electrolyte is provided at least partly by diluting said mud with brine.

19. A Drilling Mud according to claim 18 for use offshore wherein said brine is sea water.

20. A composition according to any of claims 9 to 19 containing suspended solid particles of graphite.

21. A composition according to any of claims 9 to 20 containing from 5 to 45% by weight of surfactant based on the total weight of the composition.

22. A composition according to any of claims 9 to 21 containing sufficient dissolved Electrolyte to provide, with said surfactant, a stable, solid-suspending Spherulitic or Lamellar composition.

23. A hydraulic device containing a Hydraulic Fluid wherein said Hydraulic Fluid consists essentially of an aqueous Structured Surfactant comprising water and a surfactant structure which confers shear-dependent viscosity and solid-suspending properties.

EP 0 430 602 B1

**24.** A device comprising a heat source a heat sink and a heat transfer fluid able to contact each of said heat source and said heat sink, said heat transfer fluid consisting essentially of an aqueous Structured Surfactant comprising water and a surfactant structure which confers shear-dependent viscosity and solid-suspending properties.

**25.** A device comprising at least two surfaces movable relative to one another separated by a lubricating film of an aqueous Structured Surfactant comprising water and a surfactant structure which confers shear-dependent viscosity and solid-suspending properties.

**Patentansprüche**

**1.** Die Verwendung wässriger Strukturierter Tenside,
die Wasser enthalten und die eine Tensidstruktur aufweisen, die eine von der jeweiligen Scherbeanspruchung abhängige Viskosität gewährleistet, und die Feststoff-suspendierende Eigenschaften verleiht, als Funktionelle Flüssigkeiten oder als Bestandteil Funktioneller Flüssigkeiten,
wobei diese Funktionellen Flüssigkeiten sein können Schmiermittel, Hydraulikflüssigkeiten und Wärmeübertragungsflüssigkeiten.

**2.** Die Verwendung nach Anspruch 1,
wobei die wässrigen Strukturierten Tenside als Hydraulikflüssigkeiten oder als Bestandteil von Hydraulikflüssigkeiten eingesetzt werden.

**3.** Die Verwendung nach Anspruch 1,
wobei die wässrigen Strukturierten Tenside als Wärmeübertragungsflüssigkeiten oder als Bestandteil von Wärmeübertragungsflüssigkeiten eingesetzt werden.

**4.** Die Verwendung nach Anspruch 1,
wobei die wässrigen Strukturierten Tenside als Mittel eingesetzt werden, um die Reibung zwischen gegenseitig bewegten Oberflächen zu vermindern.

**5.** Die Verwendung nach Anspruch 1,
wobei diese wässrigen Strukturierten Tenside eingesetzt werden als Spülungsflüssigkeiten und/oder als Räumflüssigkeiten bei Bohrarbeiten oder als Schlick oder Dickspülung im Bauwesen.

**6.** Ein Verfahren zur Schmierung von Oberflächen durch Aufbringung eines Schmiermittels,
dadurch gekennzeichnet, daß
dieses Schmiermittel ein wässriges Strukturiertes Tensid ist, das Wasser enthält und das eine Tensidstruktur aufweist, die eine von der jeweiligen Scherbeanspruchung abhängige Viskosität gewährleistet, und die Feststoff-suspendierende Eigenschaften verleiht.

**7.** Ein Verfahren
zum Bohren von Bohrlöchern mit Hilfe einer Bohrkrone, wobei der Bohrkrone ein Spülschlamm oder eine Spülungsflüssigkeit zugeführt wird, oder
zum Bearbeiten von Werkstücken mit Hilfe eines Schneid- oder Formwerkzeugs, wobei dem Schneid- oder Formwerkzeug eine Spülflüssigkeit zugeführt wird,
dadurch gekennzeichnet, daß
dieser Bohrschlamm, diese Spülungsflüssigkeit oder diese Spülflüssigkeit ein wässriges Strukturiertes Tensid aufweist.

**8.** Ein Verfahren nach Anspruch 6 oder 7,
dadurch gekennzeichnet, daß
das Strukturierte Tensid eine wässrige Lösung aufweist, die mit einem Tensid durchsetzt ist, das als lamellarer Feststoff, als Sphärolite oder als G-Phase vorliegt und das in einer ausreichenden Menge vorhanden ist, um Metalloberflächen vor Verschleiß zu schützen und/oder um einen Zerfall oder eine Zerkleinerung von Schiefer zu verhindern und/oder im Falle von Bohrarbeiten das gebildete Bohrklein und im Falle von Schneid- oder Formarbeiten die gebildeten Späne, Stäube und Schleifabfall in Suspension zu halten.

9. Eine Funktionelle Flüssigkeit,

ausgewählt aus einer Gruppe, umfassend Schmiermittel, Hydraulikflüssigkeiten und Wärmeübertragungsflüssigkeiten,

die ein wässriges Strukturiertes Tensid aufweist, das Wasser enthält und das eine Tensidstruktur aufweist, die eine von der jeweiligen Scherbeanspruchung abhängige Viskosität gewährleistet, die Feststoff-suspendierende Eigenschaften verleiht, und

die einen gelösten Korrosionsinhibitor enthält.

10. Ein Spülschlamm oder eine Spülungsflüssigkeit für Bohrungen,

der/die ein wässriges Strukturiertes Tensid aufweist, das Wasser enthält und das eine Tensidstruktur aufweist, die eine von der jeweiligen Scherbeanspruchung abhängige Viskosität gewährleistet und die Feststoff-suspendierende Eigenschaften verleiht.

11. Ein Spülschlamm oder eine Spülungsflüssigkeit für Bohrungen nach Anspruch 10,

dadurch gekennzeichnet, daß

in dem Spülschlamm oder in der Spülungsflüssigkeit feste Teilchen aus Schiefer und/oder aus Beschwerungsmittel suspendiert sind.

12. Ein Spülschlamm oder eine Spülungsflüssigkeit für Bohrungen nach Anspruch 10 oder 11,

dadurch gekennzeichnet, daß

der Spülschlamm oder die Spülungsflüssigkeit suspendierte Feststoffteilchen aus Baryt (Schwerspat, $BaSO_4$) und/oder aus Haematit ($Fe_2O_3$) enthält.

13. Eine Wärmeübertragungsflüssigkeit,

die ein wässriges Strukturiertes Tensid aufweist, das Wasser enthält und das eine Tensidstruktur aufweist,

die eine von der Scherbeanspruchung abhängige Viskosität gewährleistet, und die Feststoff-suspendierende Eigenschaften verleiht, und

wobei in dieser Wärmeübertragungsflüssigkeit Teilchen aus einem festen Wärmespeichermedium suspendiert sind.

14. Ein Schmiermittel,

das ein wässriges Strukturiertes Tensid aufweist, das Wasser enthält und das eine Tensidstruktur aufweist, die eine von der jeweiligen Scherbeanspruchung abhängige Viskosität gewährleistet, und die Feststoff-suspendierende Eigenschaften verleiht, und

wobei dieses Schmiermittel Zusätze enthält, welche einen Abrieb oder Verschleiß vermindern und/oder die Schmierfähigkeit verbessern.

15. Eine Schneidflüssigkeit nach Anspruch 14.

16. Eine Zusammensetzung nach einem der Ansprüche 9 bis 15,

dadurch gekennzeichnet, daß

das Strukturierte Tensid aufweist:

   (A) eine wässrige Phase; und

   (B) einen lamellaren Feststoff, eine sphärolitische Phase oder eine G-Phase der/die in der wässrigen Phase dispergiert sind oder der/die diese wässrige Phase durchsetzen.

17. Eine Zusammensetzung nach Anspruch 16,

dadurch gekennzeichnet, daß

die wässrige Phase eine Elektrolyt-Lösung ist.

18. Ein Spülschlamm oder eine Spülungsflüssigkeit für Bohrungen nach Anspruch 17,

dadurch gekennzeichnet, daß

dieser Elektrolyt wenigstens teilweise bereitgestellt wird durch Verdünnen des Spülschlammes oder der Spülflüssigkeit mit Salzwasser oder Salzlösung.

19. Ein Spülschlamm oder eine Spülungsflüssigkeit für Offshore-Bohrungen nach Anspruch 18,

dadurch gekennzeichnet, daß

dieses Salzwasser Meerwasser ist.

**20.** Eine Zusammensetzung nach einem der Ansprüche 9 bis 19,
dadurch gekennzeichnet, daß
die Zusammensetzung suspendierte feste Teilchen aus Graphit enthält.

**21.** Eine Zusammensetzung nach einem der Ansprüche 9 bis 20,
dadurch gekennzeichnet, daß
diese Zusammensetzung 5 bis 45 Gew.-% Tensid enthält, bezogen auf das Gesamtgewicht der Zusammensetzung.

**22.** Eine Zusammensetzung nach einem der Ansprüche 9 bis 21,
dadurch gekennzeichnet, daß
die Zusammensetzung eine ausreichende Menge gelösten Elektrolyt enthält, um zusammen mit dem Tensid eine beständige Feststoff-suspendierende sphärolitische oder lamellare Zusammensetzung zu bilden.

**23.** Eine hydraulisch arbeitende Vorrichtung, die eine Hydraulikflüssigkeit enthält,
dadurch gekennzeichnet, daß
diese Hydraulikflüssigkeit im wesentlichen besteht aus einem wässrigen Strukturierten Tensid, das Wasser enthält, und das eine Tensidstruktur aufweist, die eine von der jeweiligen Scherbeanspruchung abhängige Viskosität gewährleistet, und die Feststoff-suspendierende Eigenschaften verleiht.

**24.** Eine Vorrichtung mit einer Wärmequelle, mit einer Wärmesenke und mit einer Wärmeübertragungsflüssigkeit, die sowohl mit der Wärmequelle wie mit der Wärmesenke in Kontakt kommen kann,
dadurch gekennzeichnet, daß diese Wärmeübertragungsflüssigkeit im wesentlichen besteht aus einem wässrigen Strukturierten Tensid, das Wasser enthält und das eine Tensidstruktur aufweist, die eine von der jeweiligen Scherbeanspruchung abhängige Viskosität gewährleistet, und die Feststoff-suspendierende Eigenschaften verleiht.

**25.** Eine Vorrichtung mit wenigstens zwei relativ zueinander beweglichen Oberflächen, die durch einen Schmiermittelfilm voneinander getrennt sind,
dadurch gekennzeichnet, daß
dieser Schmiermittelfilm im wesentlichen aus einem wässrigen Strukturierten Tensid besteht, das Wasser enthält und das eine Tensidstruktur aufweist, die eine von der jeweiligen Scherbeanspruchung abhängige Viskosität gewährleistet, und die Feststoff-suspendierende Eigenschaften verleiht.

**Revendications**

**1.** Utilisation d'agents tensioactifs aqueux structurés comprenant de l'eau et une structure tensioactive qui confère une viscosité dépendant du cisaillement, ainsi que des propriétés de suspension de produits solides comme ou dans des fluides fonctionnels choisis parmi le groupe constitué par des lubrifiants, des fluides hydrauliques et des fluides de transfert de chaleur.

**2.** Utilisation selon la revendication 1, d'agents tensioactifs structurés aqueux comme ou dans des fluides hydrauliques.

**3.** Utilisation selon la revendication 1, d'agents tensioactifs structurés aqueux comme ou dans des fluides de transfert de chaleur.

**4.** Utilisation selon la revendication 1, d'agents tensioactifs structurés aqueux pour réduire la friction entre des surfaces en mouvement.

**5.** Utilisation d'agents tensioactifs structurés aqueux comme ou dans des fluides de forage, des fluides d'espacement ou encore des boues de construction.

**6.** Procédé de lubrification de surfaces en leur appliquant un lubrifiant fluide, caractérisé en ce que ledit lubrifiant comprend un agent tensioactif structuré aqueux comprenant de l'eau et une structure

18

tensioactive qui confère une viscosité dépendant du cisaillement et des propriétés de suspension de produits solides.

7. Procédé selon la revendication 6, pour le forage de trous d'alésage ou la mise en forme de pièces à usiner au moyen d'un foret ou d'un outil de mise en forme, dans lequel on applique respectivement un fluide de forage ou un fluide de coupe sur ledit foret ou ledit outil de mise en forme, caractérisé en ce que ledit fluide de forage ou de coupe comprend un agent tensioactif structuré aqueux.

8. Procédé selon l'une quelconque des revendications 6 et 7, dans lequel ledit agent tensioactif structuré comprend une solution aqueuse entremêlée avec un agent tensioactif présent sous forme d'un solide lamellaire, sous forme de sphérolithes ou de phase G en une quantité suffisante pour protéger de l'usure des surfaces métalliques et/ou pour inhiber la désintégration du schiste et/ou pour maintenir les débris de roches ou les déchets en suspension au cours du forage ou de la mise en forme.

9. Fluide fonctionnel choisi parmi le groupe constitué par des lubrifiants, des fluides hydrauliques et des fluides de transfert de chaleur comprenant un agent tensioactif structuré aqueux comprenant de l'eau et une structure tensioactive qui confère une viscosité dépendant du cisaillement et des propriétés de suspension de produits solides, et dans lequel est dissous un inhibiteur de corrosion.

10. Boue de forage comprenant un agent tensioactif structuré aqueux comprenant de l'eau et une structure tensioactive qui confère une viscosité dépendant du cisaillement et des propriétés de suspension de produits solides.

11. Boue de forage selon la revendication 10, dans laquelle sont mises en suspension des particules solides de schiste et/ou un agent alourdissant.

12. Boue de forage selon l'une quelconque des revendications 10 et 11, contenant des particules solides de baryte et/ou d'hématite en suspension.

13. Fluide de transfert de chaleur comprenant un agent tensioactif structuré aqueux comprenant de l'eau et une structure tensioactive qui confère une viscosité dépendant du cisaillement et des propriétés de suspension de produits solides, dans lequel sont mises en suspension des particules d'un milieu solide de stockage de chaleur.

14. Lubrifiant comprenant un agent tensioactif structuré aqueux de l'eau et une structure tensioactive qui confère une viscosité dépendant du cisaillement et des propriétés de suspension de produits solides, contenant des additifs inhibant l'usure ou favorisant le pouvoir lubrifiant.

15. Fluide de coupe selon la revendication 14.

16. Composition selon l'une quelconque des revendications 9 à 15, dans laquelle ledit agent tensioactif structuré comprend
    (A) une phase aqueuse;
    (B) un solide lamellaire, un sphérolithe ou une phase G dispersé dans ou entremêlé avec ladite phase aqueuse.

17. Composition selon la revendication 16, dans laquelle ladite phase aqueuse comprend une solution d'électrolyte.

18. Boue de forage selon la revendication 17, dans laquelle ledit électrolyte est obtenu au moins partiellement en diluant ladite boue avec de la saumure.

19. Boue de forage selon la revendication 18, à utiliser en mer, dans laquelle ladite saumure est de l'eau de mer.

20. Composition selon l'une quelconque des revendications 9 à 19, contenant des particules solides de graphite mises en suspension.

**21.** Composition selon l'une quelconque des revendications 9 à 20, contenant de 5 à 45% en poids d'un agent tensioactif, rapporté au poids total de la composition.

**22.** Composition selon l'une quelconque des revendications 9 à 21, contenant de l'électrolyte dissous en une quantité suffisante pour procurer, avec ledit agent tensioactif, une composition stable sphérolithique ou lamellaire de suspension de produits solides.

**23.** Dispositif hydraulique contenant un fluide hydraulique, dans lequel ledit fluide hydraulique est constitué essentiellement par un agent tensioactif structuré aqueux comprenant de l'eau et par une structure tensioactive qui confère une viscosité dépendant du cisaillement et des propriétés de suspension de produits solides.

**24.** Dispositif comprenant une source de chaleur, un puits thermique et un fluide de transfert de chaleur apte à entrer en contact respectivement avec ladite source de chaleur et ledit puits thermique, ledit fluide de transfert de chaleur étant constitué essentiellement par un agent tensioactif structuré aqueux comprenant de l'eau et par une structure tensioactive qui confère une viscosité dépendant du cisaillement et des propriétés de suspension de produits solides.

**25.** Dispositif comprenant au moins deux surfaces mobiles l'une par rapport à l'autre et séparées par un film lubrifiant d'un agent tensioactif structuré aqueux comprenant de l'eau et une structure tensioactive qui confère une viscosité dépendant du cisaillement et des propriétés de suspension de produits solides.